# EUROPÄISCHE PATENTANMELDUNG

(11) **EP 4 571 609 A1**
(43) Veröffentlichungstag der Anmeldung: **18.06.2025**
(21) Anmeldenummer: 23216679.3
(22) Anmeldetag: 14.12.2023
(51) Int. Cl.: G06Q 10/047, G06Q 10/083

(54) **COMPUTER-IMPLEMENTIERTES VERFAHREN, SYSTEM, COMPUTERPROGRAMM UND COMPUTER-LESBARES SPEICHERMEDIUM ZUM BEREITSTELLEN EINES PRODUKTS AN EINEM ZIELORT ZU EINEM VORGEBBAREN ZEITPUNKT**

(71) Anmelder: Siemens Digital Logistics GmbH, 67227 Frankenthal (DE)
(72) Erfinder: Frensch, Felix, 76327 Pfinztal (DE); Gaerttner, Johannes, 76199 Karlsruhe (DE); Guttenberg, Alessandro, 12161 Berlin (DE); Stentzel, Tom, 76137 Karlsruhe (DE)
(74) Vertreter: Siemens Patent Attorneys

(57) **Zusammenfassung**

Die Erfindung betrifft u. a. ein Computer-implementiertes Verfahren zum Bereitstellen eines Produkts (1) an einem Zielort (20) zu einem vorgebbaren Zeitpunkt. Weiterhin betrifft die Erfindung ein entsprechendes System (44), ein entsprechendes Computerprogramm (52) und ein entsprechendes, Computer-lesbares Speichermedium (54).

U.a. ein verbessertes Verfahren bereitzustellen, welches bspw. eine sowohl ressourcenschonende als auch schnelle Beförderung eines Produkts (1) erleichtert, und dies insb. bei der Beförderung über lange Strecken oder zu einem in der weiter in der Zukunft liegenden Zeitpunkt, werden folgende Verfahrensschritte vorgeschlagen:
• Ermitteln eines jeweiligen Ressourcenverbrauchs und einer jeweiligen Beförderungsdauer eines jeweiligen Beförderungsweges (22) des Produkts (1) von einem vorgebbaren Ursprungsort (24) zu dem Zielort (20) durch eine Simulation mehrerer Beförderungswege (22) von dem vorgebbaren Ursprungsort (24) zu dem Zielort (20),
• Ermitteln eines ersten Beförderungsweges (22A) unter den Beförderungswegen (22), welcher zumindest eine vorgebbare Bedingung bezüglich des Ressourcenverbrauchs und der Beförderungsdauer erfüllt, und
• Veranlassen der Bereitstellung des Produkts (1) durch zumindest ein Beförderungsgerät (10) entsprechend dem ersten Beförderungsweg (22A).

## Beschreibung

Die Erfindung betrifft ein Computer-implementiertes Verfahren zum Bereitstellen eines Produkts an einem Zielort zu einem vorgebbaren Zeitpunkt.

Weiterhin betrifft die Erfindung ein System aufweisend eine Speichereinrichtung mit Daten, welche ein Betriebssystem mit einer Software-Anwendung betreffen, wobei das System weiterhin eine Recheneinrichtung aufweist, welche dazu ausgebildet ist, die Software-Anwendung auszuführen, wobei die Recheneinrichtung weiter zum Bereitstellen eines Produkts an einem Zielort zu einem vorgebbaren Zeitpunkt ausgebildet ist.

Ferner betrifft die Erfindung ein Computerprogramm, umfassend Befehle, die bei der Ausführung des Computerprogramms durch das genannte System dieses veranlassen, das genannte Verfahren auszuführen.

Schließlich betrifft die Erfindung ein Computer-lesbares Speichermedium umfassend Befehle, die bei der Ausführung durch das genannte System dieses veranlassen, das genannte Verfahren auszuführen.

Derartige Vorrichtungen bzw. ein derartiges Verfahren kommen bspw. bei einer Vielzahl von Beförderungs- oder Transportaufgaben im verarbeitenden Gewerbe zum Einsatz. Typischerweise stehen hierbei mehrere Alternativen bzgl. der Bereitstellung bzw. Beförderung des Produkts zur Verfügung, wobei sich die Alternativen insb. bzgl. des damit verbundenen Aufwands oder der dafür erforderlichen Zeit unterscheiden können. Bspw. kann es sich bei der Beförderung um eine innerbetriebliche oder eine außerbetriebliche Beförderung handeln.

Eine Aufgabe der Erfindung ist es, ein verbessertes Verfahren, ein entsprechendes System, ein entsprechendes Computerprogramm und ein entsprechendes Computer-lesbares Speichermedium bereitzustellen, welches bspw. eine sowohl ressourcenschonende als auch schnelle Beförderung eines Produkts erleichtert, und dies insb. bei der Beförderung über lange Strecken oder zu einem in der weiter in der Zukunft liegenden Zeitpunkt.

Eine Lösung der Aufgabe ergibt sich durch ein Computer-implementiertes Verfahren der eingangs genannten Art durch folgende Verfahrensschritte:
- Ermitteln eines jeweiligen Ressourcenverbrauchs und einer jeweiligen Beförderungsdauer eines jeweiligen Beförderungsweges des Produkts von einem vorgebbaren Ursprungsort zu dem Zielort durch eine Simulation mehrerer Beförderungswege von dem vorgebbaren Ursprungsort zu dem Zielort,
- Ermitteln eines ersten Beförderungsweges unter den Beförderungswegen, welcher zumindest eine vorgebbare Bedingung bezüglich des Ressourcenverbrauchs und der Beförderungsdauer erfüllt, und
- Veranlassen der Bereitstellung des Produkts durch zumindest ein Beförderungsgerät entsprechend dem ersten Beförderungsweg.

Eine weitere Lösung der Aufgabe ergibt sich durch ein System der eingangs genannten Art dadurch, dass die Recheneinrichtung weiter dazu ausgebildet ist, zum Bereitstellen eines Produkts an einem Zielort zu einem vorgebbaren Zeitpunkt:
- einen jeweiligen Ressourcenverbrauch und eine jeweilige Beförderungsdauer eines jeweiligen Beförderungsweges des Produkts von einem vorgebbaren Ursprungsort zu dem Zielort durch eine Simulation mehrerer Beförderungswege von dem vorgebbaren Ursprungsort zu dem Zielort zu ermitteln;
- einen ersten Beförderungsweg unter den Beförderungswegen zu ermitteln, welcher zumindest eine vorgebbare Bedingung bezüglich des Ressourcenverbrauchs und der Beförderungsdauer erfüllt, und
- die Bereitstellung des Produkts durch zumindest ein Beförderungsgerät entsprechend dem ersten Beförderungsweg zu veranlassen.

Ferner ergibt sich eine weitere Lösung der Aufgabe durch ein Computerprogramm der eingangs genannten Art, wobei das Computerprogramm Befehle umfasst, die bei der Ausführung des Programms durch das vorgeschlagene System dieses veranlassen, das vorgeschlagene Verfahren auszuführen.

Schließlich ergibt sich eine weitere Lösung der Aufgabe durch ein Computer-lesbares Speichermedium der eingangs genannten Art, wobei das computerlesbare Speichermedium Befehle umfasst, die bei der Ausführung durch das vorgeschlagene System dieses veranlassen, das vorgeschlagene Verfahren auszuführen. Vorzugsweise ist das Speichermedium nichtflüchtig.

Bei dem Produkt kann es sich um ein Stückgut oder Schüttgut handeln, wobei bspw. auch Behältnisse entsprechend befördert werden können, die bereitzustellende Gase oder Flüssigkeiten beinhalten. Bspw. kann das Produkt als Maschine oder Anlage bzw. Anlagenteil ausgestaltet sein, bspw. als Komponente eines Antriebsstranges oder einer Anlagenautomatisierung, wie zum Beispiel ein Elektromotor, ein Getriebe, ein Umrichter, eine Fördereinrichtung, usw. Das entsprechende Produkt soll dabei an einem Zielort bereitgestellt werden, bspw. an einem bestimmten Ort einer Fabrik, bei welcher ein weiterer Bearbeitungsschritt an dem Produkt vorgenommen wird. Bei anderen Beispielen wird das jeweilige Produkt am Zielort konsumiert bzw. an den (End-) Kunden übergeben. Ferner soll das Produkt an einem vorgebbaren Zeitpunkt an dem Zielort bereitgestellt werden, also bspw. an einem bestimmten Datum und zu einer bestimmten Uhrzeit.

Für die Bereitstellung des Produkts am Zielort zu dem vorgebbaren Zeitpunkt werden zunächst mehrere Beförderungswege betrachtet, mittels derer das Produkt von einem vorgebbaren Ursprungsort zu dem Zielort befördert werden kann. Für jeden der Beförderungswege wird dabei der jeweilige Ressourcenverbrauch und die jeweilige Beförderungsdauer ermittelt, wofür eine Simulation zum Einsatz kommt. Für die Simulation können dabei gängige Software-Anwendungen, z.B. für ereignisdiskrete Simulationen oder auch (eine Kombination mit) eine(r) kontinuierliche(n) Simulation eingesetzt werden, bspw. die Logistikplattform AX4, die Supply Chain Suite (SCS) oder XCargo von Siemens Digital Logistics GmbH, Frankenthal, Deutschland, oder ähnliche Software-Anwendungen von anderen Anbietern. Insb. mit der Unterstützung solcher Software-Anwendungen können der Ressourcenverbrauch und die Beförderungsdauer für den jeweiligen Beförderungsweg für das Produkt ermittelt werden. Der jeweilige Ressourcenverbrauch und die jeweilige Beförderungsdauer von zumindest zwei unterschiedlichen Beförderungswegen, vorzugsweise mindestens fünf, mindestens 20 oder bis zu 100 unterschiedlichen Beförderungswegen, sollen dabei mittels der genannten Simulation ermittelt werden. Denkbar sind dabei auch Beförderungswege, die an unterschiedlichen Orten beginnen, wenn das (gleiche) Produkt an unterschiedlichen Ursprungsorten für die Beförderung zum Zielort verfügbar ist, wie weiter unten noch weiter erläutert wird.

Unter den betrachteten Beförderungswegen, für welche der jeweilige Ressourcenverbrauch und die jeweilige Beförderungsdauer ermittelt wurden, wird ein erster Beförderungsweg ermittelt bzw. ausgewählt. Wurden im Schritt zuvor 20 unterschiedliche Beförderungswege ermittelt, so wird also unter den 20 Beförderungswegen einer als der erste Beförderungsweg ausgewählt. Als erster Beförderungsweg wird dabei einer der zuvor betrachteten Beförderungswegen ausgewählt, wenn der auszuwählende Beförderungsweg zumindest eine vorgebbare Bedingung bezüglich des Ressourcenverbrauchs und der Beförderungsdauer erfüllt. D.h. also, dass der Ressourcenverbrauch und die Beförderungsdauer, die mit dem auszuwählenden Beförderungsweg einhergehen, die genannte Bedingung erfüllen.

Bspw. kann die genannte Bedingung für die Beförderungsdauer eine akzeptable maximale Beförderungsdauer umfassen, insbesondere wenn das Produkt verderblich ist oder bei dringend benötigten Medikamenten. Eine akzeptable maximale Beförderungsdauer könnte für verderbliche oder eilig zu befördernde Produkte bspw. 12 oder 24 Stunden betragen. Für andere Produkte, bspw. schwere und voluminöse Produkte ohne besondere Dringlichkeit, könnte die akzeptable maximale Beförderungsdauer auch bei zwei bis drei Wochen liegen. In solchen Fällen kann die akzeptable maximale Beförderungsdauer insbesondere als Randbedingung für die Simulation verwendet werden, die sicherstellt, dass die Beförderung des Produktes innerhalb einer sinnvollen Zeit erfolgt. Da die Bereitstellung des Produkts jedoch in jedem Fall am Zielort zu dem vorgebbaren Zeitpunkt erfolgen soll, könnte die akzeptable maximale Beförderungsdauer in manchen Beispielen auch recht lange sein, bspw. mehrere Wochen oder Monate.

Weiterhin kann die genannte Bedingung für den Ressourcenverbrauch bspw. einen akzeptablen maximalen Ressourcenverbrauch umfassen. Dabei kann der maximale Ressourcenverbrauch bspw. eine Treibstoff- oder Energiemenge oder auch die Dauer der Nutzung durch das jeweilige Beförderungsgerät umfassen, da dieses dann nicht für die Beförderung eines anderen Produkts zur Verfügung steht. Beispielsweise kann der jeweilige Ressourcenverbrauchs somit als eine Art Aufwand verstanden werden, welcher für die Beförderung des Produkts entsprechend dem jeweiligen Beförderungsweg betrieben werden muss. Oftmals stehen dabei der jeweilige Ressourcenverbrauch und die jeweilige Beförderungsdauer derart in einer Wechselwirkung, dass eine kurze Beförderungsdauer einen hohen Ressourcenverbrauch bedingt und umgekehrt.

Insbesondere abhängig von der jeweiligen Situation kann die vorgebbare Bedingung dafür verwendet werden, einen optimalen, ersten Beförderungsweg unter den zur Verfügung stehenden Beförderungswegen zu finden. Je nach Situation und der entsprechend vorgegebenen Bedingung können dies auch unterschiedliche Beförderungswege sein: bspw. können bei einer Bereitstellung dringend benötigter Medikamenten die akzeptable maximale Beförderungsdauer vergleichsweise sehr kurz sein und der akzeptable maximale Ressourcenverbrauch vergleichsweise sehr hoch sein. Dies dürfte bspw. bei der Beförderung von wiederzuverwertenden Wertstoffen zu einer Recycling-Anlage umgekehrt sein.

Sollten zwei oder mehr der Beförderungswege die jeweilige vorgebbare Bedingung erfüllen, kann bspw. jener dieser Beförderungswege als erster Beförderungsweg ausgewählt werden, welcher die jeweilige Bedingung am besten erfüllt. Insb. wenn zwei oder mehr der Beförderungswege die jeweilige vorgebbare Bedingung, bspw. gleichermaßen gut, erfüllen, können diese Beförderungswege bzw. der ermittelte Ressourcenverbrauch und/oder die ermittelte Beförderungsdauer des jeweiligen Beförderungsweges bspw. mittels eines Anzeigegeräts dem Bedienpersonal angezeigt werden und insb. dem Bedienpersonal eine Auswahl eines dieser Beförderungswege als erster Beförderungsweg ermöglicht werden.

Nachdem der erste Beförderungsweg ermittelt wurde, wird die Bereitstellung des Produkts durch zumindest ein Beförderungsgerät, ggf. auch mehrere Beförderungsgeräte, entsprechend dem ersten Beförderungsweg veranlasst. Der Begriff des "Veranlassens" der Bereitstellung kann dabei bspw. so verstanden werden, dass der erste Beförderungsweg gespeichert wird, bspw. in der Speichereinrichtung, und dem Beförderungsgerät zur Verfügung gestellt wird bzw. an das Beförderungsgerät übermittelt wird, um die entsprechende Beförderung des Produkts gemäß dem ersten Beförderungsweg durchzuführen. Hierzu kann das Beförderungsgerät bspw. darüber informiert werden, dass der erste Beförderungsweg zum Abruf durch das Beförderungsgerät bereitsteht. Vorzugsweise ist das System bzw. dessen Rechen- oder Speichereinrichtung datentechnisch mit dem Beförderungsgerät verbunden, insbesondere dann, wenn die vorgeschlagene Ermittlung des ersten Beförderungsweges durch das System bzw. dessen Recheneinrichtung erfolgt und die Bereitstellung des Produkts durch das Beförderungsgerät. In manchen Beispielen kann der Begriff des "Veranlassens" der Bereitstellung auch so verstanden werden, dass das Beförderungsgerät den ersten Beförderungsweg direkt umsetzt, indem das System bzw. dessen Rechen- oder Speichereinrichtung entsprechende Befehle an das Beförderungsgerät übermittelt. Insbesondere kann das Veranlassen der Bereitstellung des Produkts durch das zumindest eine Beförderungsgerät entsprechend dem ersten Beförderungsweg umfassen, dass die Zurverfügungstellung des Produkts am Ursprungsort durch einen Lieferanten angestoßen wird, bspw. indem das System bzw. dessen Rechen-oder Speichereinrichtung datentechnisch mit einem Lieferanten-System verbunden ist und eine entsprechende Anforderungs-Information von dem System an das Lieferanten-System übermittelt wird. Die übermittelte Anforderungs-Information kann insbesondere Informationen zum Produkt und dem Zeitpunkt der Zurverfügungstellung umfassen.

Die Beförderungsgerät kann beispielsweise eine Automatisierungs- bzw. speicherprogrammierbare Steuerung (SPS, englisch: programmable logic controller, PLC) und optional weiterhin einen Antrieb und einen Elektromotor umfassen. Darüber hinaus kann eine Tragkonstruktion zur Abstützung bzw. zum Halten des Produkts von dem Beförderungsgerät umfasst sein. Der Elektromotor kann vom Antrieb angetrieben, von der Automatisierungssteuerung gesteuert werden und mit der Tragkonstruktion verbunden sein. Somit ist das Beförderungsgerät insb. dazu ausgestattet und konfiguriert, das Produkt gemäß dem ersten Beförderungsweg zu befördern. Insbesondere können auch mehrere Beförderungsgeräte vorgesehen sein, die für die Beförderung des Produkts gemäß dem ersten Beförderungsweg zum Einsatz kommen. Dabei können die Beförderungsgeräte gleichzeitig und/oder sequentiell verwendet werden, wobei der sequentielle Einsatz insbesondere für verschiedene Teilstecken des ersten Beförderungswegs denkbar ist.

In manchen Beispielen ist der Verfahrensschritt des Veranlassens der Bereitstellung des Produkts durch das zumindest eine Beförderungsgerät entsprechend dem ersten Beförderungsweg nicht notwendiger Bestandteil des vorgeschlagenen, Computer-implementierten Verfahrens zum Bereitstellen eines Produkts, was analog für das vorgeschlagene System, das vorgeschlagene Computerprogramm und das vorgeschlagene computerlesbare Speichermedium gilt.

Bei einer vorteilhaften Ausgestaltung der Erfindung ist die vorgebbare Bedingung als Optimum einer Zielfunktion ausgestaltet, welche den Ressourcenverbrauch mit einem ersten Gewichtungsfaktor und die Beförderungsdauer mit einem zweiten Gewichtungsfaktor berücksichtigt.

Wie oben bereits erwähnt, können der jeweilige Ressourcenverbrauch und die jeweilige Beförderungsdauer derart in einer Wechselwirkung sein, dass eine kurze Beförderungsdauer einen hohen Ressourcenverbrauch bedingt und umgekehrt. Dieser Zielkonflikt kann für viele Beispiele dadurch aufgelöst werden, dass die oftmals nicht miteinander erfüllbaren Ziele des geringen Ressourcenverbrauch und der kurzen Beförderungsdauer jeweils gewichtet werden. Der jeweilige Gewichtungsfaktor repräsentiert dabei die Wertigkeit oder Priorisierung der jeweiligen Größe und kann je nach Situation oder Umfeld auch anders ausfallen, wobei ein höherer Wert des Gewichtungsfaktors eine höhere Wertigkeit oder Priorisierung ausdrückt.

Für die beiden oben genannten Beispiele der dringend benötigten Medikamente und der wiederzuverwertenden Wertstoffe könnte eine Gewichtung bspw. derart vorgenommen werden, dass bei den Medikamenten der Beförderungsdauer ein zehn Mal größeres Gewicht zugemessen würde als dem Ressourcenverbrauch, d.h. der zweite Gewichtungsfaktor (für die Beförderungsdauer) wäre zehn und der erste Gewichtungsfaktor (für den Ressourcenverbrauch) wäre eins. Bei den Wertstoffen hingegen würde dem Ressourcenverbrauch ein zehn Mal größeres Gewicht zugemessen wird als der Beförderungsdauer, d.h. der erste Gewichtungsfaktor (für den Ressourcenverbrauch) wäre zehn und der zweite Gewichtungsfaktor (für die Beförderungsdauer) wäre eins. Angenommen, dass die übrigen Parameter (wie der jeweilige Zielort, der jeweilige Ursprungsort und der jeweilige vorgebbaren Zeitpunkt sowie andere möglicherweise relevante Parameter) für die Beförderung der Medikamente und der Wertstoffe gleich wären, könnten für die Medikamente und die Wertstoffe allein schon wegen der unterschiedlichen Gewichtungsfaktoren unterschiedliche Beförderungswege als jeweiliger erster Beförderungsweg ermittelt werden. So könnte bspw. für die Medikamente ein besonders schnelles oder leistungsfähiges Beförderungsgerät, ein Kurier oder ein Flugzeug für die Beförderung ausgewählt bzw. erst gesondert für die Medikamente bereitgestellt werden, was jedoch mehr Ressourcen verbraucht. Für die Wertstoffe könnte jedoch u.U. auf ein erst später verfügbares Beförderungsgerät gewartet werden, oder eine eher gemächliche Beförderung per Bahn oder Containerschiff gewählt werden, was deutlich weniger Ressourcen verbraucht.

Bei einer weiteren vorteilhaften Ausgestaltung der Erfindung umfasst der jeweilige Beförderungsweg mehrere Umschlagpunkte, bei welchem das Produkt von einem der Beförderungsgeräte auf ein anderes der Beförderungsgeräte umgeschlagen wird.

Bei dem Umschlag handelt es sich dabei um die Aufnahme eines Transportgutes in ein Transportmittel (also die Verladung) oder die Entladung aus einem Transportmittel (also die Abladung), wobei das Produkt dem Transportgut entspricht und das Beförderungsgerät dem Transportmittel. Insbesondere kann der Umschlag alle Förder- und Lagervorgänge beim Übergang eines Transportgutes auf ein Verkehrs- oder Transportmittel, beim Abgang der Güter und deren Wechsel des Transportmittels umfassen.

Insbesondere wird dabei jedem Umschlagpunkt eine jeweilige Umschlagdauer zugewiesen, die die Beförderungsdauer verlängert, da das Produkt während dieser Umschlagdauer nicht befördert wird und sich somit die Bereitstellung des Produkts am Zielort um die jeweilige Umschlagdauer verzögert. Weiterhin wird jedem Umschlagpunkt bspw. ein jeweiliger Umschlag-Ressourcenverbrauch zugewiesen, da das Umschlagen Ressourcen verbraucht, wie z.B. die für das Umschlagen erforderliche Energie oder die Nutzung des jeweiligen Beförderungsgeräts, welches während der Umschlagdauer nicht anderweitig genutzt werden kann. Bspw. kann das Umschlagen auch die Emission von Treibhausgasen, bspw. CO₂, verursachen, was ebenfalls als Ressourcenverbrauch angesehen werden kann.

Bei einer weiteren vorteilhaften Ausgestaltung der Erfindung umfasst der jeweilige Ressourcenverbrauch zumindest einen Energieverbrauch, ein Materialverbrauch, eine Nutzung des jeweiligen Beförderungsgeräts, eine Treibhausgas-Emission oder einen Aufwand, welche/r jeweils auf die Beförderung des Produkts zurückgeht.

Der jeweilige Ressourcenverbrauch kann bspw. berücksichtigen: die für die Beförderung des Produkts verbrauchte Energie, welche bspw. in kWh oder auch in einem Energieäquivalent bzw. einer Treibstoffmenge o.ä. gemessen werden kann; das für die Beförderung des Produkts verbrauchte Material, insb. eine Abnutzung oder eine Treibstoffmenge; eine für die Beförderung des Produkts erforderliche Nutzung des jeweiligen Beförderungsgeräts, welche mit einem bestimmten Faktor bzw. einer bestimmten Gewichtung berücksichtigt werden kann, der bzw. die die Verfügbarkeit bzw. Wertigkeit oder Priorisierung des jeweiligen Beförderungsgeräts berücksichtigt; eine für die Beförderung des Produkts insb. durch das jeweilige Beförderungsgerät verursachte Treibhausgas-Emission, wobei zu den Treibhausgasen Kohlenstoffdioxid (CO₂), Methan (CH₄) und Lachgas (N₂O) gehören und bspw. für die Beförderung des Produkts CO₂-Äquivalente berücksichtigt werden können; und ein für die Beförderung des Produkts betriebener Aufwand, welcher insb. einen erforderlichen Arbeitsaufwand von an der Beförderung beteiligten Personen umfasst oder einen finanziellen Aufwand, welcher sich in Kosten oder einem Preis für die Beförderung des Produkts ausdrückt.

Insbesondere kann der jeweilige Ressourcenverbrauch dabei von der Masse und den Abmessungen des Produkts abhängen, bspw. da die Beförderung von schwereren und größeren Produkten bzgl. des dafür erforderlichen Ressourcenverbrauchs aufwändiger ist. Weiterhin kann der jeweilige Ressourcenverbrauch insb. von dem oder den Beförderungsgeräte(n) abhängen, die für die Beförderung des Produkts verfügbar sind oder genutzt werden. Insbesondere können die Beförderungsart, d.h. per AGV/LWK/ Schiff/Flugzeug bzw. der Verkehrsträger bzw. das Beförderungs-Equipment sowie die Auslastung des Verkehrsträgers bzw. des jeweiligen Transportgeräts berücksichtigt werden. Unter AGV versteht man hierbei ein fahrerloses Transportfahrzeug (englisch Automated Guided Vehicle, AGV), also ein flurgebundenes Fördermittel mit eigenem Fahrantrieb, das automatisch gesteuert und berührungslos geführt wird. Eine geringe Auslastung des Verkehrsträgers bzw. des jeweiligen Transportgeräts führt dabei oftmals zu einem höheren Ressourcenverbrauch pro befördertem Produkt und umgekehrt.

Vorzugsweise werden einer oder mehrere der genannten Aspekte des Ressourcenverbrauchs berücksichtigt. Werden mehrere der genannten Aspekte des Ressourcenverbrauchs berücksichtigt, so kann der oben erläuterte erste Gewichtungsfaktor für den Ressourcenverbrauch vorteilhafterweise feiner aufgeschlüsselt werden, indem für die verschiedenen Aspekte des Ressourcenverbrauchs Beiträge zu dem ersten Gewichtungsfaktor festgelegt werden, welche die Wertigkeit oder Priorisierung des jeweiligen Aspekts repräsentieren.

Bei einer weiteren vorteilhaften Ausgestaltung der Erfindung sind mehrere Ursprungsorte für die Herstellung des Produkts mit einem jeweiligen Ursprungs-Ressourcenverbrauch verfügbar, wobei der jeweilige Ressourcenverbrauch des jeweiligen Beförderungsweges des Produkts den jeweiligen Ursprungs-Ressourcenverbrauch für die Herstellung des Produkts, insb. am vorgebbaren Ursprungsort, umfasst, und wobei die jeweilige Beförderungsdauer des jeweiligen Beförderungsweges des Produkts den jeweiligen Ursprungsort berücksichtigt.

In manchen Beispielen kann das Produkt nicht nur an einem Ursprungsort, sondern an mehreren unterschiedlichen Ursprungsorten verfügbar sein, wobei angenommen wird, dass das Produkt an dem jeweiligen Ursprungsort hergestellt wird. Weiterhin kann der Herstellung des Produkts ein jeweiliger Ursprungs-Ressourcenverbrauch zugeordnet werden, welcher ausdrückt, wie hoch der Ressourcenverbrauch zur Herstellung des Produkts gewesen ist. Auch wenn das Produkt am jeweiligen Ursprungsort nicht bzw. nicht ausschließlich hergestellt wurde, sondern bspw. jeweiligen Ursprungsort lediglich zur Verfügung gestellt wird, bevor es an den Zielort befördert werden kann, kann dem Produkt für den jeweiligen Ursprungsort dennoch ein jeweiliger Ursprungs-Ressourcenverbrauch zugeordnet werden, welcher jeweils den Ressourcenverbrauch von der Herstellung des Produkts bis zur Bereitstellung am jeweiligen Ursprungsort berücksichtigt.

Insbesondere für eine ganzheitlichere Betrachtung kann bei dem erläuterten Ressourcenverbrauch für die Beförderung gemäß den jeweiligen Beförderungswegen auch der erläuterte Ursprungs-Ressourcenverbrauch berücksichtigt werden. Insbesondere können auch für den Ursprungs-Ressourcenverbrauch die oben erläuterten Aspekte des Ressourcenverbrauchs aufgegliedert und ggf. gewichtet werden. Für die erläuterte ganzheitlichere Betrachtung kann insbesondere weiterhin die jeweilige Beförderungsdauer des jeweiligen Beförderungsweges den jeweiligen Ursprungsort ebenfalls berücksichtigen, wodurch sich insbesondere verschieden lange Beförderungswege und somit auch verschieden lange Beförderungsdauern ergeben können. Eine solche ganzheitlichere Betrachtung kann bspw. zu einem Wechsel des Lieferanten führen, welcher das Produkt für die Beförderung vom jeweiligen Ursprungsort an den Zielort zur Verfügung stellt. Dies kann bspw. der Fall sein, wenn ein Lieferant an einem Ursprungsort mit einem günstigen Beförderungsweg für das Produkt einen hohen Ursprungs-Ressourcenverbrauch hat, jedoch ein anderer Lieferant an einem anderen Ursprungsort mit einem eher ungünstigen Beförderungsweg einen sehr niedrigen Ursprungs-Ressourcenverbrauch für das Produkt hat. Allerdings müsste hierzu der eher ungünstige Beförderungsweg des anderen Lieferanten - zumindest in der Gesamtabwägung - noch in einer akzeptablen Beförderungsdauer zurückzulegen sein.

Bei einer weiteren vorteilhaften Ausgestaltung der Erfindung liegt der vorgebbare Zeitpunkt mehrere Jahre in der Zukunft, wobei für den jeweiligen Ressourcenverbrauch eine Skalierung in die Zukunft anhand zumindest eines makroökonomischen Parameters vorgenommen wird und wobei der jeweilige makroökonomische Parameter einen Produktivitätszuwachs, einen Produktivitätsfortschritt, eine Inflationsrate, ein Bruttoinlandsprodukt oder eine Kaufkraftparität, insb. entlang des jeweiligen Beförderungsweges des Produkts, berücksichtigt.

Insbesondere für eine längerfristige Versorgungssicherheit bzgl. des Produkts kann der (insb. simulierte) vorgebbare Zeitpunkt mehrere Jahre in der Zukunft liegen. Für eine realistische Ermittlung des ersten Beförderungsweges in der Zukunft kann der jeweilige, zukünftige Ressourcenverbrauch der verschiedenen Beförderungswege zumindest abgeschätzt werden. Hierzu wird für den jeweiligen Ressourcenverbrauch eine Skalierung in die Zukunft anhand zumindest eines makroökonomischen Parameters vorgenommen, wobei bspw. der heutige (oder der zuletzt verfügbare), jeweilige Ressourcenverbrauch die Basis der Skalierung bilden kann.

Vorteilhafterweise wird die Skalierung anhand eines jeweiligen makroökonomischen Parameters vorgenommen, der auch für weiter in der Zukunft liegende Zeitpunkte und für verschiedene Länder oder geographische Regionen bekannt ist oder zumindest abgeschätzt werden kann. Insb. können also auch Prognosen für zukünftige Werte jeweiligen makroökonomischen Parameters verwendet werden.

Als Parameter kann bspw. der Produktivitätszuwachs verwendet werden, der eine Steigerung des Outputs pro Inputeinheit beschreibt, also eine positive Veränderung des Verhältnisses von Produktionsergebnis zu den dafür eingesetzten Produktionsfaktoren (z. B. Arbeit, Kapital und Umwelt), im Zeitverlauf. Produktivitätszuwächse können unter anderem durch effizientere Arbeitsabläufe, verbesserte Organisationsstrukturen, verbesserte Rahmenbedingungen des Staates, technischen Fortschritt im Allgemeinen sowie durch einen Mehreinsatz der Produktionsfaktoren Arbeit und Kapital entstehen. Von Relevanz ist bei dem Produktivitätszuwachs im Zusammenhang mit der Beförderung des Produkts insb. der technische Fortschritt, durch welchen der Ressourcenverbrauch für die Beförderung des Produkts tendenziell über die Zeit geringer wird. Ferner kann der Produktivitätsfortschritt für die Skalierung verwendet werden, also die Steigerung der Arbeitsproduktivität. Weitere Skalierungsparameter können insb. eine Inflationsrate (auch Preissteigerungsrate oder Teuerung; bezeichnet den Anstieg des allgemeinen Preisniveaus), ein Bruttoinlandsprodukt (also der Gesamtwert aller Waren und Dienstleistungen, die während eines Wirtschaftsjahres innerhalb der Landesgrenzen einer Volkswirtschaft als Endprodukte erwirtschaftet wurden, nach Abzug aller Vorleistungen) oder eine Kaufkraftparität sein. Hierbei liegt Kaufkraftparität zwischen zwei geographischen Räumen im selben Währungsraum dann vor, wenn Waren und Dienstleistungen eines Warenkorbes für gleich hohe Geldbeträge erworben werden können. Werden zwei unterschiedliche Währungsräume verglichen, so werden die Geldbeträge durch Wechselkurse vergleichbar gemacht.

Vorzugsweise können zwei oder mehr der genannten Parameter für die Skalierung herangezogen werden und ggf. gewichtet werden. Ferner können insbesondere bei Beförderungswegen durch mehrere Länder oder geographische Regionen der jeweilige, genannten Parameter lokal ermittelt und dann über den gesamten, jeweiligen Beförderungsweg hinweg (insb. passend gewichtet, bspw. nach Weglänge) aufsummiert werden, um lokale Beiträge zur Skalierung zum jeweiligen Ressourcenverbrauch adäquat berücksichtigen zu können.

Die Betrachtung einer längerfristigen Versorgungssicherheit wie oben erläutert kann insb. auch dazu verwendet werden, einen Bedarf für langfristige oder strategische Änderungen zu erkennen und entsprechende Maßnahmen anzustoßen, wie z.B. der oben erläuterte Lieferantenwechsel oder den Aufbau eines neuen Lieferanten.

Der Vorteil der Verwendung des jeweiligen makroökonomischen Parameters ist dabei insb., dass vergleichsweise verlässliche Schlussfolgerungen und Resultate bzgl. des zukünftigen, jeweiligen Ressourcenverbrauchs ermöglicht werden, obwohl Detailkenntnisse über einzelne Aspekte des jeweiligen Ressourcenverbrauchs des jeweiligen Beförderungsweges für die Zukunft oftmals nicht verfügbar sind. Obwohl der jeweilige makroökonomische Parameter grob erscheinen mag, kann dennoch eine gute und gleichzeitig einfach durchzuführende Abschätzung der genannten Skalierung vorgenommen werden.

Bei einer weiteren vorteilhaften Ausgestaltung der Erfindung umfasst das Computer-implementierte Verfahren weiterhin den Verfahrensschritt:
- Bereitstellen von Informationen zum jeweiligen Ressourcenverbrauch bzgl. der inner- oder außerbetrieblichen, Beförderung bzw. Beförderung per Land-, Straßen-, Schienen-, Schiffs- oder Luftverkehr, oder von Umschlags-oder Lagerprozessen, insb. über zumindest eine Programmierschnittstelle zu einer jeweiligen Informations-Datenbank oder zu einem jeweiligen Webserver, welche/r jeweils über die Informationen verfügt.

Oftmals sind die verschiedenen Aspekte zum jeweiligen Ressourcenverbrauch in speziellen Information-Datenbanken oder über Webserver verfügbar und können somit von dem vorgeschlagenen System zur Ermittlung des jeweiligen Ressourcenverbrauchs und ggf. der jeweiligen Beförderungsdauer abgerufen werden.

Die Informationen zur innerbetrieblichen Beförderung sind in der Regel auch betriebsintern verfügbar, bspw. in einem MES-, SCADA- oder ERP-System, welches bspw. mit dem vorgeschlagenen System datentechnisch verbunden ist. Dabei versteht man unter MES: engl. Manufacturing Execution System, deutsch oftmals Produktionsleitsystem, eine prozessnah operierende Ebene eines mehrschichtigen Fertigungsmanagementsystems; unter SCADA: engl. Supervisory Control and Data Acquisition, deutsch: Überwachung, Steuerung und Datenerfassung, im Kontext der Industrial Control Systems bzw. Industrielle Steuerungsanlagen wird unter SCADA das Computer-System bzw. die Software zur Überwachung und Steuerung technischer Prozesse verstanden; und unter ERP: engl. Enterprise-Resource-Planning, die unternehmerische Aufgabe, Personal, Ressourcen, Kapital, Betriebsmittel, Material sowie Informations- und Kommunikations-technik im Sinne des Unternehmenszwecks rechtzeitig und bedarfsgerecht zu planen, zu steuern und zu verwalten.

Die Informationen zur außerbetrieblichen Beförderung sind bspw. über betriebsexterne Informations-Datenbanken oder Webserver verfügbar. Bspw. kann das vorgeschlagene System auf den Baltic Dry Index (BDI) für Beförderungswege zu Luft und zu Wasser zurückgreifen, der von der Baltic Exchange in London veröffentlicht wird und ein wichtiger Preisindex für das weltweite Verschiffen von Hauptfrachtgütern (hauptsächlich Kohle, Eisenerz und Getreide) auf Standardrouten ist und ein Indikator für den Zustand der Weltwirtschaft ist.

Für Beförderungswege zu Land kann das vorgeschlagene System zum einen insb. für die Beförderung auf der Straße auf Dieselpreise oder Strompreise, Arbeitskosten und Abschreibungskosten und zum anderen auf gängige Routenplaner zurückgreifen, die ebenfalls speziellen Information-Datenbanken oder über Webserver verfügbar sind. Entsprechende Informationen sind für die Beförderung auf der Schiene verfügbar, bspw. mittels eines Skalierungsfaktors ausgehend von den Informationen bzgl. der Beförderung auf der Straße.

Zum Datenaustausch mit der jeweiligen Informationsquelle weist das vorgeschlagene System vorzugsweise eine Programmierschnittstelle auf. Dabei wird eine Programmierschnittstelle auch Anwendungsschnittstelle, genauer Schnittstelle zur Programmierung von Anwendungen, oder kurz API (von englisch application programming interface, wörtlich ,Anwendungs-programmier-schnittstelle') genannt und ist ein Programmteil, der von einem Softwaresystem anderen Programmen zur Anbindung an das System zur Verfügung gestellt wird. Beispielsweise kann das vorgeschlagene System die Informationen zum jeweiligen Ressourcenverbrauch über eine API von einer entsprechenden Informations-Datenbank oder einem Webserver erhalten, wobei ein Webserver (lateinisch servire ,dienen'; englisch server ,Diener', ,Dienst') ein Server ist, der Dokumente an Clients wie z. B. Webbrowser überträgt. Als Webserver bezeichnet man den Computer mit Webserver-Software oder nur die Webserver-Software selbst. Webserver können lokal, in Firmennetzwerken und überwiegend als WWW-Dienst im Internet eingesetzt werden. Dokumente, wie hier die genannten Informationen können somit dem geforderten Zweck lokal, firmenintern und weltweit zur Verfügung gestellt werden.

Bei einer weiteren vorteilhaften Ausgestaltung der Erfindung umfasst das Computer-implementierte Verfahren weiterhin den Verfahrensschritt bzw. die Verfahrensschritte:
- Anzeigen des ermittelten Ressourcenverbrauchs und/oder der ermittelten Beförderungsdauer des ersten Beförderungsweges des Produkts sowie optional des jeweiligen Ursprungsorts auf einem Anzeigegerät und/oder
- Speichern des ermittelten Ressourcenverbrauchs und/oder der ermittelten Beförderungsdauer des ersten Beförderungsweges des Produkts zusammen mit dem Produkt sowie optional des jeweiligen Ursprungsorts in einer Produktlebenszyklusmanagement (PLM)-Datenbank.

Die Anzeige des ermittelten Ressourcenverbrauchs und/oder der ermittelten Beförderungsdauer des ersten Beförderungsweges des Produkts sowie optional des jeweiligen Ursprungsorts auf einem Anzeigegerät kann insb. dem Bedienpersonal die Planung und Umsetzung der Beförderung des Produkts erleichtern. Insb. können auch die entsprechenden Informationen bzgl. des zweitbesten oder von weiteren Beförderungswegen angezeigt werden und dem Bedienpersonal zwei oder mehr der Beförderungswege zur Auswahl angeboten werden, insb. mit Hilfe des Anzeigegeräts. Wie oben bereits erläutert, können mehrere Beförderungswege bzw. der ermittelte Ressourcenverbrauch und/oder die ermittelte Beförderungsdauer des jeweiligen Beförderungsweges mittels eines Anzeigegeräts dem Bedienpersonal angezeigt werden und insb. dem Bedienpersonal eine Auswahl eines dieser Beförderungswege als erster Beförderungsweg ermöglicht werden. Die Auswahl eines der Beförderungswege durch das Bedienpersonal kann dabei bspw. mittels eines Eingabegeräts erfolgen, wie z.B. eine Tastatur, eine Computer-Maus oder ein Mikrofon bei einer Spracheingabe.

Zusätzlich oder alternativ können der ermittelten Ressourcenverbrauch und/oder die ermittelte Beförderungsdauer des ersten Beförderungsweges des Produkts zusammen mit Informationen zum Produkt sowie optional des jeweiligen Ursprungsorts in einer PLM-Datenbank gespeichert und vorzugsweise mit anderen Produktlebenszyklus-Informationen des Produkts verknüpft werden. Unter PLM wird hierbei ein Konzept zur nahtlosen Integration sämtlicher Informationen verstanden, die im Verlauf des Lebenszyklus eines Produktes anfallen, insb. von der Produktentwicklung bis zur Produktionsfreigabe. Bspw. können diese Informationen weiter mit entsprechenden Informationen bzgl. des Produkts in verbundenen MES-, SCADA- oder ERP-Systemen verknüpft werden, was eine vollständige Nachvollzierbarkeit des Produkts von der Ideenfindung bis zur Bereitstellung an den Kunden und ggf. darüber hinaus ermöglicht. Vorzugsweise erfolgt die Übermittlung von Informationen von dem vorgeschlagenen System an das PLM- bzw. MES-, SCADA- oder ERP-System mittels einer API oder eines Webservers, wobei die Informationen in einer JSON-Datei vorliegen und übermittelt werden können. Unter JSON versteht man dabei die JavaScript Object Notation, ein kompaktes Datenformat in einer einfach lesbaren Textform für den Datenaustausch zwischen Anwendungen. JSON ist von Programmiersprachen unabhängig. Parser und Generatoren existieren in allen verbreiteten Sprachen.

Bei einer weiteren vorteilhaften Ausgestaltung der Erfindung umfasst das Computer-implementierte Verfahren weiterhin den Verfahrensschritt:
- Bereitstellung des Produkts durch das zumindest eine Beförderungsgerät entsprechend dem ersten Beförderungsweg.

Vorzugsweise setzt das Beförderungsgerät den ersten Beförderungsweg direkt um, bspw. indem das System bzw. dessen Rechen- oder Speichereinrichtung entsprechende Befehle an das Beförderungsgerät übermittelt und dieses die empfangenen Befehle zur Beförderung des Produkts ausführt. Ferner kann insb. die Zurverfügungstellung des Produkts am Ursprungsort durch einen Lieferanten angestoßen werden, bspw. indem das System bzw. dessen Rechen- oder Speichereinrichtung datentechnisch mit einem Lieferanten-System verbunden ist und eine entsprechende Anforderungs-Information von dem System an das Lieferanten-System übermittelt wird. In einigen Beispielen ist das jeweilige Beförderungsgerät von dem vorgeschlagenen System umfasst.

Vorzugsweise werden das vorgeschlagene Computer-implementierte Verfahren, das entsprechende System, das entsprechende Computerprogramm und das entsprechende computerlesbare Speichermedium dazu verwendet, mehr als nur ein Produkt bereitzustellen. Dabei können die mehreren Produkte gleichartig oder verschiedenartig sein. Beispielsweise können der erste Beförderungsweg ermittelt und die entsprechende Beförderung gemäß dem ermittelten ersten Beförderungsweg für mehrere Produkte gleichzeitig vorgenommen werden, insb. wenn die genannten Produkte denselben Ursprungsort, denselben Zielort oder zumindest abschnittsweise denselben ersten Beförderungsweg haben. In solchen Konstellationen kann eine besonders ressourcenschonende und schnelle Beförderung der Produkte ermöglicht werden. Hierzu können die erläuterten Verfahrensschritte für jedes der zu befördernden Produkte durchgeführt werden und dann eine Optimierung der Beförderung der Produkte vorgenommen werden, bspw. auch durch jeweilige, weitere Gewichtungsfaktoren für das jeweilige Produkt.

Im Folgenden wird die Erfindung anhand der in den Figuren dargestellten Ausführungsbeispiele näher beschrieben und erläutert. Es zeigen:
- FIGS 1-4: eine schematische Darstellung eines ersten bis vierten Ausführungsbeispiels des vorgeschlagenen Systems, und
- FIG 5: eine schematische Darstellung eines Ablaufdiagramms eines Ausführungsbeispiels des vorgeschlagenen Verfahrens.

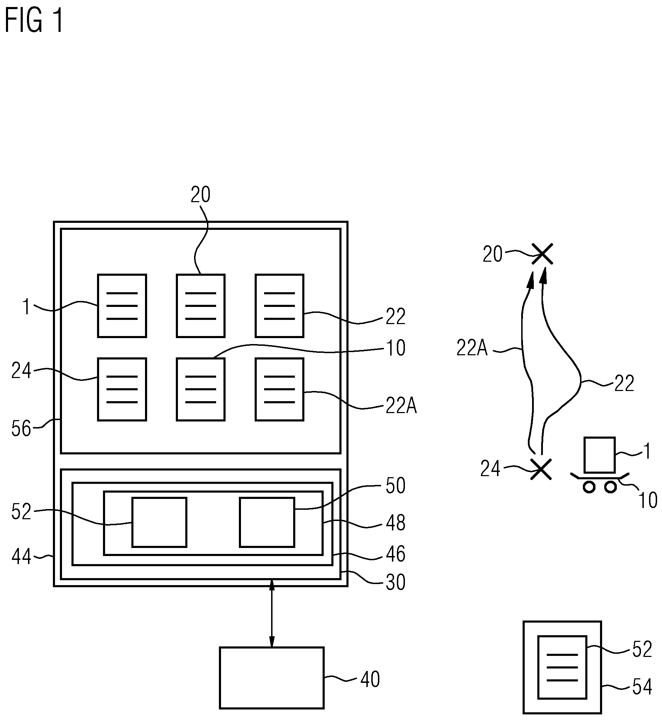

Die Figur 1 zeigt eine schematische Darstellung eines ersten Ausführungsbeispiels des vorgeschlagenen Systems 44.

Das System 44 weist eine Speichereinrichtung 46 mit einem Betriebssystem 48 sowie Daten 52 auf, die eine Software-Anwendung 50 betreffen, die ebenfalls von dem Betriebssystem 48 umfasst sind. Weiterhin weist das System 44 eine Recheneinrichtung 30 auf, welche dazu ausgebildet ist, die Software-Anwendung 50 auszuführen. Ferner ist die Recheneinrichtung 30 dazu ausgebildet, folgende Schritte zur Bereitstellung eines Produkts 1 an einem Zielort 20 zu einem vorgebbaren Zeitpunkt durchzuführen:
- Ermitteln eines jeweiligen Ressourcenverbrauchs und einer jeweiligen Beförderungsdauer eines jeweiligen Beförderungsweges 22 des Produkts 1 von einem vorgebbaren Ursprungsort 24 zu dem Zielort 20 durch eine Simulation mehrerer Beförderungswege 22 von dem vorgebbaren Ursprungsort 24 zu dem Zielort 20,
- Ermitteln eines ersten Beförderungsweges 22A unter den Beförderungswegen 22, welcher zumindest eine vorgebbare Bedingung bezüglich des Ressourcenverbrauchs und der Beförderungsdauer erfüllt, und
- Veranlassen der Bereitstellung des Produkts 1 durch zumindest ein Beförderungsgerät 10 entsprechend dem ersten Beförderungsweg 22A.

Zur Durchführung der erläuterten Schritte weist das System 44 einen weiteren Speicher 56 auf, in welchem Informationen zu dem Produkt 1, dem Beförderungsgerät 10, dem Zielort 20, und dem Ursprungsort 24 verfügbar bzw. abgelegt sind. In dem weiteren Speicher 56 wird auch der ermittelte, erste Beförderungsweg 22A abgelegt. Ferner weist das System 44 optional ein Anzeigegerät 40 auf, auf welchem bspw. dem Bedienpersonal der ermittelten Ressourcenverbrauch und/oder die ermittelte Beförderungsdauer des ersten Beförderungsweges 22A des Produkts 1 sowie weiterhin optional der jeweiligen Ursprungsorts 24 angezeigt werden kann.

In manchen Beispielen ist der Verfahrensschritt des Veranlassens der Bereitstellung des Produkts 1 durch das zumindest eine Beförderungsgerät 10 entsprechend dem ersten Beförderungsweg 22A nicht notwendiger Bestandteil des vorgeschlagenen, Computer-implementierten Verfahrens zum Bereitstellen eines Produkts 1, was analog für das vorgeschlagene System 44, das vorgeschlagene Computerprogramm 52 und das vorgeschlagene Computer-lesbare Speichermedium 54 gilt.

In der Figur 1 sind weiterhin ein Computer-lesbares Speichermedium 54 sowie ein Computerprogramm 52 dargestellt. Dabei ist das Computerprogramm 52 auf dem Computer-lesbaren Speichermedium 54 abgespeichert, wobei das Computerprogramm 52 Befehle umfasst, die bei Ausführung des Computerprogramms 52 durch das System 44 dieses veranlassen, das vorgeschlagene Verfahren auszuführen.

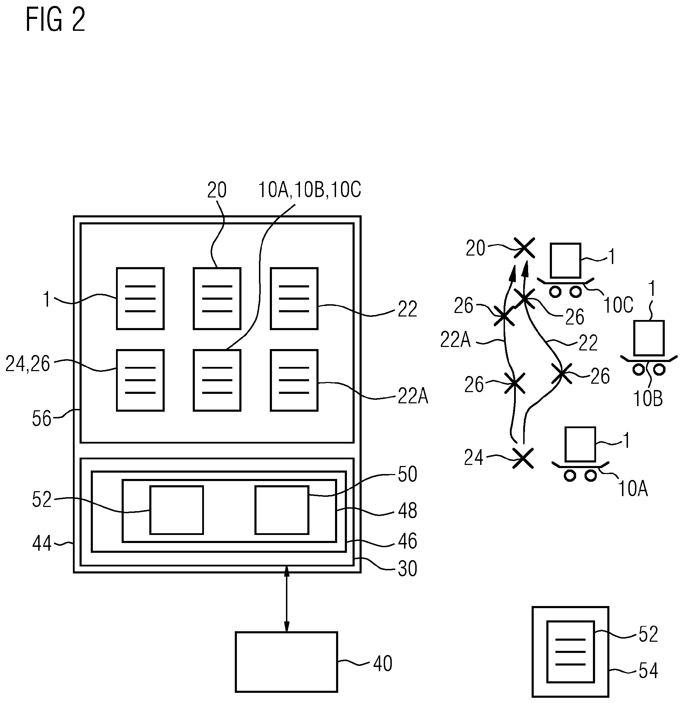

Die Figur 2 zeigt eine schematische Darstellung eines zweiten Ausführungsbeispiels des vorgeschlagenen Systems 44, wobei gleiche Bezugszeichen wie in Figur 1 gleiche Gegenstände bezeichnen.

In Abwandlung des ersten Ausführungsbeispiels sind beim zweiten Ausführungsbeispiel für die beiden Beförderungswege 22 jeweils zwei Umschlagpunkte 26 vorgesehen. Beim ersten Umschlagspunkt 26 wird das Produkt 1 von einem ersten Beförderungsgerät 10A auf ein zweites Beförderungsgerät 10B umgeschlagen und beim zweiten Umschlagspunkt 26 von dem zweiten Beförderungsgerät 10B auf ein drittes Beförderungsgerät 10C.

Dabei werden Informationen zu den Umschlagpunkten 26 sowie den Beförderungsgeräten 10A, 10B, 10C ebenfalls in dem weiteren Speicher 56 abgelegt.

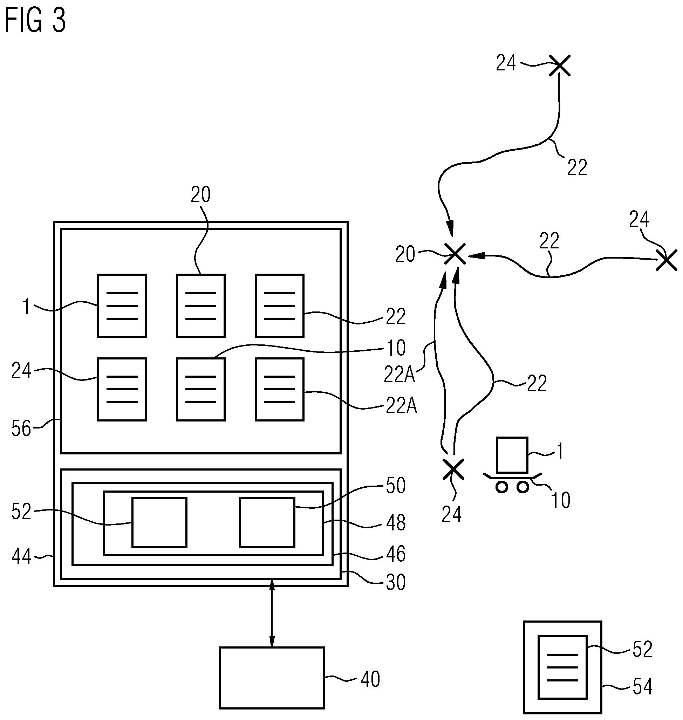

Die Figur 3 zeigt eine schematische Darstellung eines dritten Ausführungsbeispiels des vorgeschlagenen Systems 44.

In Abwandlung des ersten oder zweiten Ausführungsbeispiels sind beim dritten Ausführungsbeispiel mehrere Ursprungsorte 24 für die Herstellung bzw. Zurverfügungstellung des Produkts 1 verfügbar. Dabei wird jedem der Ursprungsorte 24 bzgl. des Produkts 1 ein jeweiliger Ursprungs-Ressourcenverbrauch zugeordnet. Der jeweilige Ursprungs-Ressourcenverbrauch wird dabei bei der Ermittlung des jeweilige Ressourcenverbrauchs bzgl. des jeweiligen Beförderungsweges 22 des Produkts 1 von dem jeweiligen Ursprungsort 24 zum Zielort 20 mit umfasst und berücksichtigt. Ferner wird auch für die jeweilige Beförderungsdauer des jeweiligen Beförderungsweges 22 des Produkts 1 der jeweiligen Ursprungsort 24 berücksichtigt.

Dabei werden Informationen zu den Ursprungsorten 24 und ggf. zu dem jeweiligen Ursprungs-Ressourcenverbrauch ebenfalls in dem weiteren Speicher 56 abgelegt.

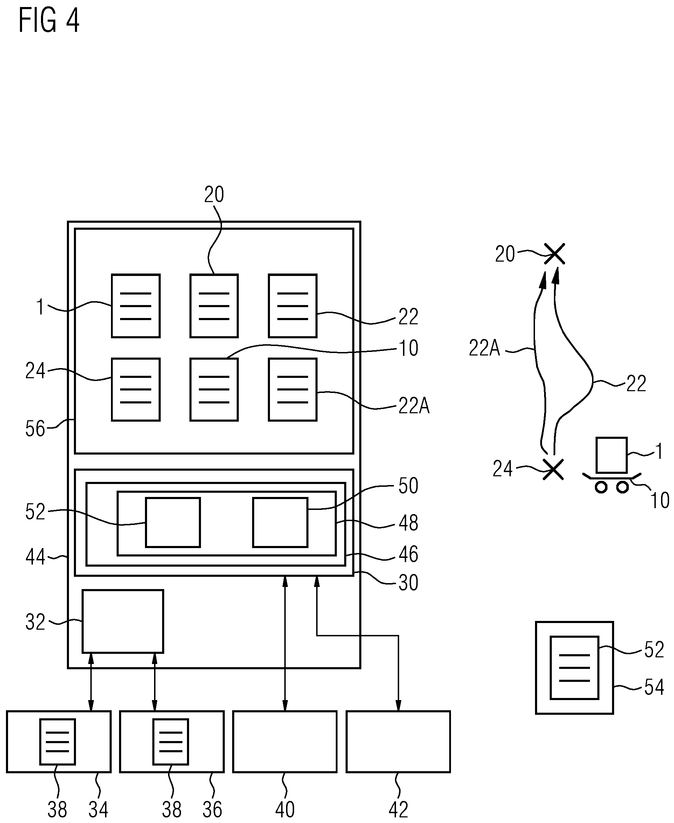

Die Figur 4 zeigt eine schematische Darstellung eines vierten Ausführungsbeispiels des vorgeschlagenen Systems 44.

Beim vierten Ausführungsbeispiel weist das System 44 weiterhin eine Programmierschnittstelle 32 auf, mit welcher das System 44 mit einer Informations-Datenbank 34 und mit einem Webserver 36 datentechnisch verbunden ist. Die Informations-Datenbank 34 und der Webserver 36 können dem System 44 Informationen 38 insb. zum jeweiligen Ressourcenverbrauch bzgl. der inner- oder außerbetrieblichen, Beförderung bzw. Beförderung per Land-, Straßen-, Schienen-, Schiffs- oder Luftverkehr, oder von Umschlags- oder Lagerprozessen bereitstellen.

Weiterhin ist das System 44 mit einer PLM-Datenbank 42 datentechnisch verbunden, in welcher der ermittelte Ressourcenverbrauch und/oder die ermittelte Beförderungsdauer des ersten Beförderungsweges 22A des Produkts 1 zusammen mit Informationen zum Produkt 1 sowie optional des jeweiligen Ursprungsorts 24 gespeichert werden können.

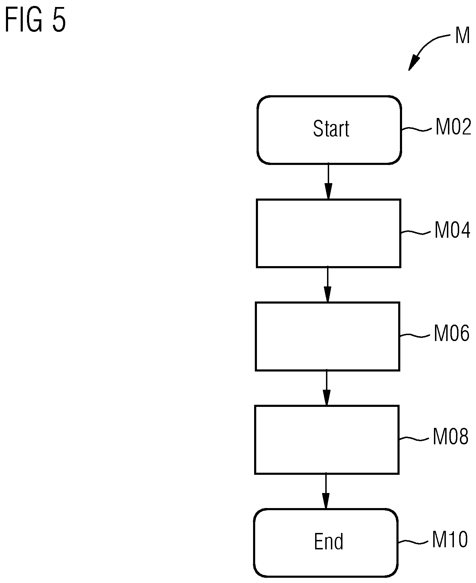

Die Figur 5 zeigt eine schematische Darstellung eines Ablaufdiagramms eines Ausführungsbeispiels des vorgeschlagenen Verfahrens. Bspw. für eines der in den Figuren 1 bis 4 dargestellten System kann der Ablauf M mit dem Schritt M02 starten und mehrere Schritte umfassen, welche durch einen Prozessor, insbesondere die oben erläuterte Recheneinrichtung, ausgeführt werden können.

Diese Schritte umfassen den Schritt M04 gemäß welchem ein jeweiliger Ressourcenverbrauch und eine jeweilige Beförderungsdauer eines jeweiligen Beförderungsweges des Produkts von einem vorgebbaren Ursprungsort zu dem Zielort durch eine Simulation mehrerer Beförderungswege von dem vorgebbaren Ursprungsort zu dem Zielort ermitteln werden; den Schritt M06 gemäß welchem ein erster Beförderungsweg unter den Beförderungswegen zu ermittelt wird, welcher zumindest eine vorgebbare Bedingung bezüglich des Ressourcenverbrauchs und der Beförderungsdauer erfüllt; und den Schritt M08 gemäß welchem die Bereitstellung des Produkts durch zumindest ein Beförderungsgerät entsprechend dem ersten Beförderungsweg veranlasst wird. Mit dem Schritt M10 kann der Ablauf enden.

In manchen Beispielen kann der erläuterte Ablauf M weitere Schritte umfassen, die weiter oben im Zusammenhang mit dem vorgeschlagenen Verfahren bzw. dem vorgeschlagenen System erläutert wurden.

## Patentansprüche

1. Computer-implementiertes Verfahren zum Bereitstellen eines Produkts (1) an einem Zielort (20) zu einem vorgebbaren Zeitpunkt, wobei das Verfahren umfasst:
• Ermitteln eines jeweiligen Ressourcenverbrauchs und einer jeweiligen Beförderungsdauer eines jeweiligen Beförderungsweges (22) des Produkts (1) von einem vorgebbaren Ursprungsort (24) zu dem Zielort (20) durch eine Simulation mehrerer Beförderungswege (22) von dem vorgebbaren Ursprungsort (24) zu dem Zielort (20),
• Ermitteln eines ersten Beförderungsweges (22A) unter den Beförderungswegen (22), welcher zumindest eine vorgebbare Bedingung bezüglich des Ressourcenverbrauchs und der Beförderungsdauer erfüllt, und
• Veranlassen der Bereitstellung des Produkts (1) durch zumindest ein Beförderungsgerät (10) entsprechend dem ersten Beförderungsweg (22A).

2. Computer-implementiertes Verfahren nach Anspruch 1,
wobei die vorgebbare Bedingung als Optimum einer Zielfunktion ausgestaltet ist, welche den Ressourcenverbrauch mit einem ersten Gewichtungsfaktor und die Beförderungsdauer mit einem zweiten Gewichtungsfaktor berücksichtigt.

3. Computer-implementiertes Verfahren nach einem der vorhergehenden Ansprüche,
wobei der jeweilige Beförderungsweg (22) mehrere Umschlagpunkte (26) umfasst, bei welchem das Produkt (1) von einem der Beförderungsgeräte (10A) auf ein anderes der Beförderungsgeräte (10B) umgeschlagen wird.

4. Computer-implementiertes Verfahren nach einem der vorhergehenden Ansprüche,
wobei der jeweilige Ressourcenverbrauch zumindest einen Energieverbrauch, ein Materialverbrauch, eine Nutzung des jeweiligen Beförderungsgeräts (10), eine Treibhausgas-Emission oder einen Aufwand umfasst, welche/r jeweils auf die Beförderung des Produkts (1) zurückgeht.

5. Computer-implementiertes Verfahren nach einem der vorhergehenden Ansprüche,
wobei mehrere Ursprungsorte (24) für die Herstellung des Produkts (1) mit einem jeweiligen Ursprungs-Ressourcenverbrauch verfügbar sind,
wobei der jeweilige Ressourcenverbrauch des jeweiligen Beförderungsweges des Produkts (1) den jeweiligen Ursprungs-Ressourcenverbrauch für die Herstellung des Produkts (1), insb. am vorgebbaren Ursprungsort, umfasst, und
wobei die jeweilige Beförderungsdauer des jeweiligen Beförderungsweges (22) des Produkts (1) den jeweiligen Ursprungsort (24) berücksichtigt.

6. Computer-implementiertes Verfahren nach einem der vorhergehenden Ansprüche,
wobei der vorgebbare Zeitpunkt mehrere Jahre in der Zukunft liegt,
wobei für den jeweiligen Ressourcenverbrauch eine Skalierung in die Zukunft anhand zumindest eines makroökonomischen Parameters vorgenommen wird und
wobei der jeweilige makroökonomische Parameter einen Produktivitätszuwachs, einen Produktivitätsfortschritt, eine Inflationsrate, ein Bruttoinlandsprodukt oder eine Kaufkraftparität, insb. entlang des jeweiligen Beförderungsweges des Produkts (1), berücksichtigt.

7. Computer-implementiertes Verfahren nach einem der vorhergehenden Ansprüche, weiterhin umfassend:
• Bereitstellen von Informationen (38) zum jeweiligen Ressourcenverbrauch bzgl. der inner- oder außerbetrieblichen, Beförderung bzw. Beförderung per Land-, Straßen-, Schienen-, Schiffs- oder Luftverkehr, oder von Umschlags- oder Lagerprozessen, insb. über zumindest eine Programmierschnittstelle (32) zu einer jeweiligen Informations-Datenbank (34) oder zu einem jeweiligen Webserver (36), welche/r jeweils über die Informationen (38) verfügt.

8. Computer-implementiertes Verfahren nach einem der vorhergehenden Ansprüche, weiterhin umfassend:
• Anzeigen des ermittelten Ressourcenverbrauchs und/oder der ermittelten Beförderungsdauer des ersten Beförderungsweges (22A) des Produkts (1) sowie optional des jeweiligen Ursprungsorts (24) auf einem Anzeigegerät (40) sowie und/oder
• Speichern des ermittelten Ressourcenverbrauchs und/oder der ermittelten Beförderungsdauer des ersten Beförderungsweges (22A) des Produkts (1) zusammen mit Informationen zum Produkt (1) sowie optional des jeweiligen Ursprungsorts (24) in einer Produktlebenszyklusmanagement (PLM)-Datenbank (42).

9. Computer-implementiertes Verfahren nach einem der vor-hergehenden Ansprüche, weiterhin umfassend:
• Bereitstellung des Produkts (1) durch das zumindest eine Beförderungsgerät (10) entsprechend dem ersten Beförderungsweg (22A).

10. System (44) aufweisend:
• eine Speichereinrichtung (46) mit einem Betriebssystem (48) mit eine Software-Anwendung (50) betreffenden Daten (52) und
• eine Recheneinrichtung (30), welche dazu ausgebildet ist, die Software-Anwendung (50) auszuführen,
wobei die Recheneinrichtung (46) weiter dazu ausgebildet ist, zum Bereitstellen eines Produkts (1) an einem Zielort (20) zu einem vorgebbaren Zeitpunkt:
• einen jeweiligen Ressourcenverbrauch und eine jeweilige Beförderungsdauer eines jeweiligen Beförderungsweges (22) des Produkts (1) von einem vorgebbaren Ursprungsort (24) zu dem Zielort (20) durch eine Simulation mehrerer Beförderungswege (22) von dem vorgebbaren Ursprungsort (24) zu dem Zielort (20) zu ermitteln;
• einen ersten Beförderungsweg (22A) unter den Beförderungswegen (22) zu ermitteln, welcher zumindest eine vorgebbare Bedingung bezüglich des Ressourcenverbrauchs und der Beförderungsdauer erfüllt, und
• die Bereitstellung des Produkts (1) durch zumindest ein Beförderungsgerät (10) entsprechend dem ersten Beförderungsweg (22A) zu veranlassen.

11. Computerprogramm (52), umfassend Befehle, die bei der Ausführung des Computerprogramms (52) durch das System (44) nach Anspruch 10 dieses veranlassen, das Verfahren nach einem der Ansprüche 1 bis 9 auszuführen.

12. Computerlesbares Speichermedium (54) umfassend Befehle, die bei der Ausführung durch das System nach Anspruch 10 dieses veranlassen, das Verfahren nach einem der Ansprüche 1 bis 9 auszuführen.
